# EUROPEAN PATENT APPLICATION

(11) **EP 2 230 826 A1**
(43) Date of publication of application: **22.09.2010**
(21) Application number: 09250756.5
(22) Date of filing: 18.03.2009
(51) Int. Cl.: H04M 3/30

(54) **Operation of telecommunications connections by means of a sealing current**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

The condition of a telecommunications connection comprising an electric circuit and carrying only digital traffic, is maintained in the absence of a conventional telephone service by causing a conditioning current to be transmitted over the circuit, the conditioning current being substantially greater than that generated by the digital communications using the line. The current is typically similar in magnitude to the currents generated by the off hook or ringing conditions of a conventional telephony circuit, the absence of which has been observed to cause deterioration in line condition.

The current can be generated by a modified line diagnostic unit 25. To avoid interference with the digital equipment connected at the consumer end of the circuit, the conditioning current is dc or low frequency. A shunt 29 is provided across the consumer end of the circuit to allow this current to flow.

## Description

This invention relates to the operation of telecommunications systems, and in particular the operation of modern digital services over a conventional telephone network.

Conventional telephone systems have developed over more than a century and the legacy network is now very well established. Increasingly, the conventional "legacy" telephone network is being used for services for which it was never originally intended, in particular data services. It is desirable to use the existing network for these new purposes wherever possible, as it can be inconvenient and expensive to install new infrastructure. The provision of digital services may be achieved using a multiservice access node (MSAN), typically installed in a telephone exchange, or at some intermediate point in the distribution network between the exchange and the individual network termination, to provide the various services such as traditional analogue telephony (known as POTS - plain old telephone service), and data systems such as ISDN (integrated Services Digital Network) and DSL (Digital Subscriber Loop), all from a single platform. Alternatively, separate equipment such as Digital Subscriber Line Access Multiplexers (DSLAMs) may be used to provide the various types of services to customers. A variety of DSL services are available, such as ADSL (asymmetric DSL), SDSL (symmetric DSL), HDSL (high bit rate DSL), and VDSL (very high bit rate DSL). These are sometimes referred to by the generic term xDSL.

However, the use of the network for these new purposes can present difficulties. In particular, it has been found that the relatively high currents inherent in the POTS service have assisted in maintaining the reliability of the line, as these currents perform a "whetting" or "sealing" function by breaking down resistive elements in joints and elsewhere, which would otherwise build up as a result of corrosion or other effects. When an existing line is used only for digital services, with no traditional "POTS" analogue service (known as a "dry loop"), reliability problems have been noticeably more common. As the POTS functionality has been disabled on the relevant MSAN line card, the "dry" line has no AC ringing current or off-hook current draw which could act to condition the line by preventing rectified joints & corrosion build up. The DSL customer premises equipment (CPE) includes high-pass filters to prevent interference by (and to) POTS traffic carried over the same line, so even if a d.c or low frequency voltage suitable for whetting the line were applied, the filters would prevent any current passing (the high pass filters in the DSL equipment are effectively open-circuit to low frequencies and dc).

The present invention provides a solution which can be applied at the exchange, or in the metallic part of the loop in a part-fibre network such as "fibre to the cabinet" (FTTCab).

According to the present invention there is provided a method of maintaining the condition of a telecommunications connection comprising an electric circuit and carrying only digital traffic, by causing a conditioning current to be transmitted over the circuit, the conditioning current being substantially greater than that generated by the digital communications using the line.

The invention also provides a line conditioning unit for maintaining the condition of an electric circuit, the conditioning unit comprising a routiner for initiating a line conditioning process according to a predetermined condition being achieved, and a current generator controlled by the routiner for generating a current substantially greater than that normally carried by the circuit. This predetermined condition may be the elapse of a predetermined interval of time since the previous activation, or it may be in response to some other indicator such as a decline in signal quality.

The invention also comprises an interface connector for interfacing between a telecommunications network and customer premises equipment, the interface connector comprising an inductive shunt for sinking a line-whetting current. The interface connector may be embodied in a network termination unit but, preferably, it is configured to be connected between such a network termination unit and the data communications equipment to the network termination.

In the preferred embodiment, this interface connector replaces the standard microfilter through which data communications equipment is connected to the network termination unit. Typical microfilters have provision for connection of a standard telephone jackplug as well as the differently-designed data communications equipment plug. The replacement of the microfilter with an interface connection having no provision for connection of a standard telephone would prevent attempts to incorrectly connect such a telephone to the line, since the line conditioning process and a standard telephone service are necessarily mutually exclusive - the line-conditioning process is required because of the absence of a POTS service.

The current is preferably generated intermittently, either periodically, or in response to a measure of declining line quality. This solution requires no modification to the MSAN linecard in the exchange or cabinet, and requires only a simple operation on the customer premises which can be achieved by the customer without the need for the attendance of a skilled and trained technician.

An embodiment will be described with reference to the drawings, in which:
Figure 1 is a schematic illustration of a conventional telecommunications circuit with separate DSLAM and POTS line cards.
Figure 2 is a schematic illustration of a conventional telecommunications circuit with integrated MSAN line card providing both digital and POTS telecommunications services
Figure 3 is a circuit diagram of an embodiment of the invention.
Figure 4 is a schematic illustration indicative of how the installation of Figure 3 may be incorporated into the circuit of Figure 2.
Figure 5 is an illustration of the external form of a connector according to the invention.

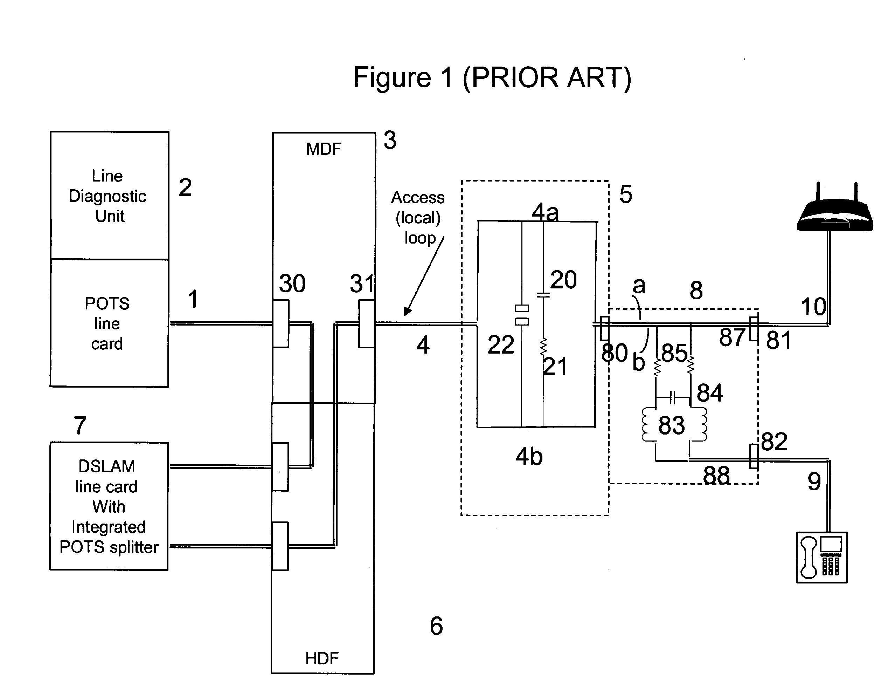

The conventional circuit of Figure 1 interconnects a POTS line card 1 and a network termination equipment (NTE) 5 through a main distribution frame (MDF) 3 and an access local loop 4. A line diagnostic unit (LDU) 2 is associated with several line cards. The LDU is a narrowband test head capable of connection to each of several lines in turn by way of a test access relay on each line card 1. This is used by the network operator to test each line 4 by periodically sending signals over them to check the on-hook resistance and other properties of the circuit including the components 20, 21, 22 of the NTE 5.

Provision is made for a digital service such as ADSL (asymmetric digital subscriber line) by interposing a handover distribution frame (HDF) 6 between the connections 30, 31 to the MDF 3, allowing the provision of a second line card 7. This second line card may provide DSLAM capability together with a splitter to separate out the POTS and ADSL services. The card 7 may be configured to allow provision of digital and analogue services from different providers. The conventional analogue POTS service operates at baseband (dc), with low frequency ac (typically 90V at 20 to 40Hz) used for the ringing current, whilst the ADSL service operates on a high frequency modulation, typically above 25kHz.

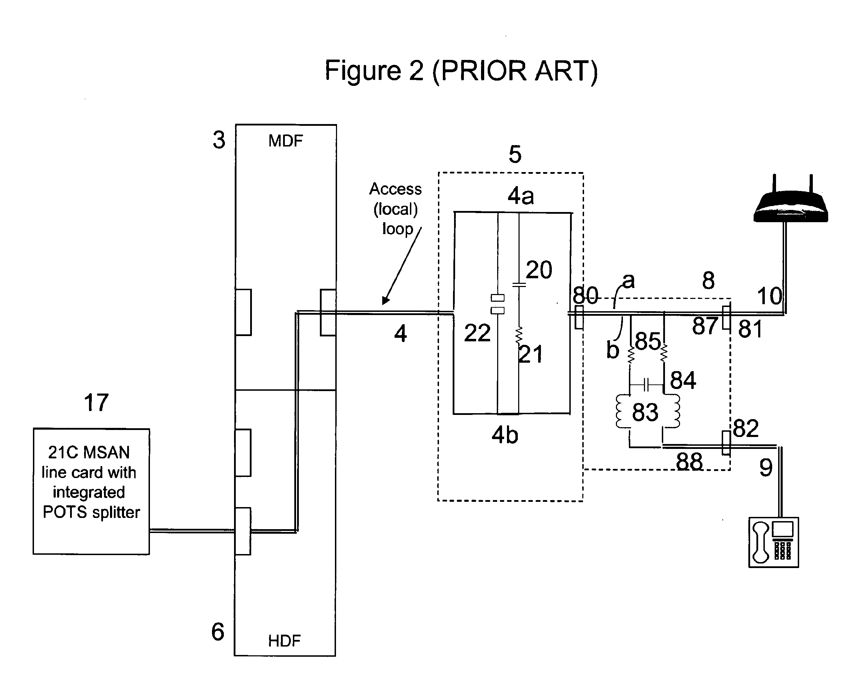

In the prior art system of Figure 2 the functions of the line card 1, line diagnostic unit 2 and DSLAM 7 are integrated in a multiservice access node (MSAN) line card 17 connected to the handover distribution frame 6. This configuration allows the core network to integrate these services without modification to the distribution network 1, 7, 6, 3 and customer equipment 8,9,10.

As shown in Figures 1 and 2, a network termination equipment (NTE) 5 is provided at the customer premises. The NTE has reactive and resistive components 20, 21 connected across the wire pair 4 between the A-leg 4a and B-leg 4b, together with a surge protection device 22.

The customer fits a microfilter 8 (also known as a splitter) or service-specific face plate to the NTE 5. This microfilter provides a low-pass filtered input/output 9 for conventional telephony and a separate input/output 10 allowing high frequency for the digital service. The internal circuitry of a typical microfilter/splitter 8 is also depicted in Figures 1 and 2. The microfilter 8 comprises a plug 80 for connection to the NTE 5, and two sockets 81, 82 respectively for connection of plugs from a modem 10 and a conventional telephone 9. Each connector 80, 81, 82, has connections for both legs of the circuit, conventionally known as the A-leg and B-leg)

Within the device 8, the legs a, b both split to provide an ADSL branch 87 between the plug 80 and ADSL socket 81, and a POTS branch 88 between the plug 80 and POTS socket 82. To prevent the ADSL circuit causing high frequency interference on telephone equipment connected to the POTS socket 82, the POTS branch 88 incorporates a low pass filter comprising a balanced pair of inductances 83, a capacitor 84, and a balanced pair of resistances 85. The ADSL branch 87 has no filtering within the splitter. Most modems 10 include any high-pass filtering they need to operate.

In these prior art configurations there is a direct current path between the line card (1 or 17) and the user's telephone equipment 9. When the handset 9 is in use (off hook) a current of up to 40mA dc may be carried. Ringing is generated by the application of an alternating voltage, typically of 90V, when an incoming call is made.

It has been found that voice circuits which are unused for lengthy periods build up resistive elements in joints and elsewhere as a result of corrosion or snagging of the wires. However, the currents carried at off-hook or ringing when a call is initiated are normally sufficient to break down this resistance, so that the call may progress. Such currents are said to "whet" or "condition" the line.

However, some customers only require an ADSL service, and wish to dispense with the provision of POTS. Examples include customers who prefer to use a cellular telephone for voice calls, those who use voice over internet protocol (VoIP), and unstaffed locations in which a telecommunications connection is provided for data-gathering purposes only. Such connections do not have an analogue service, and the much smaller currents carried by the ADSL service are not sufficient to provide the whetting function. As a result the line quality may gradually deteriorate.

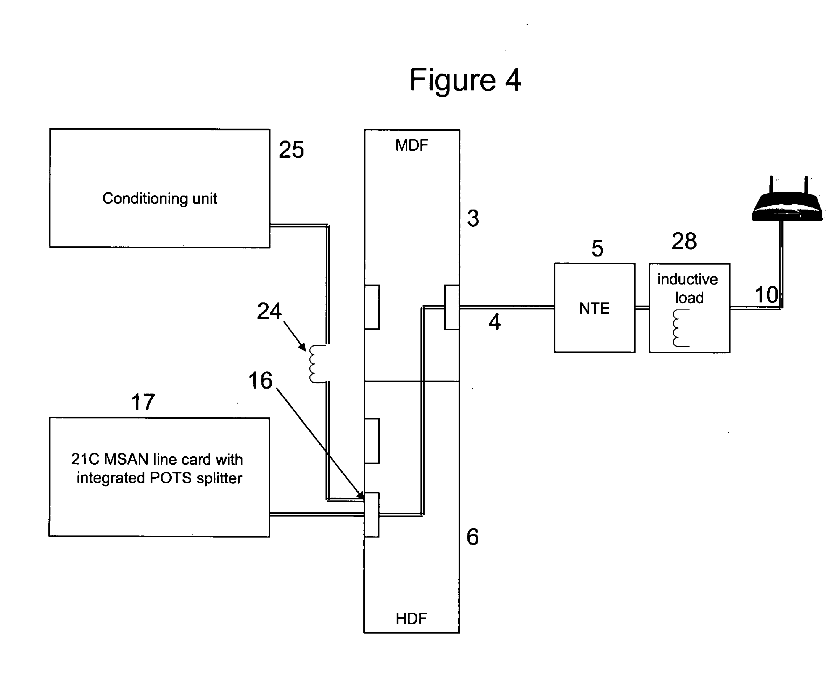

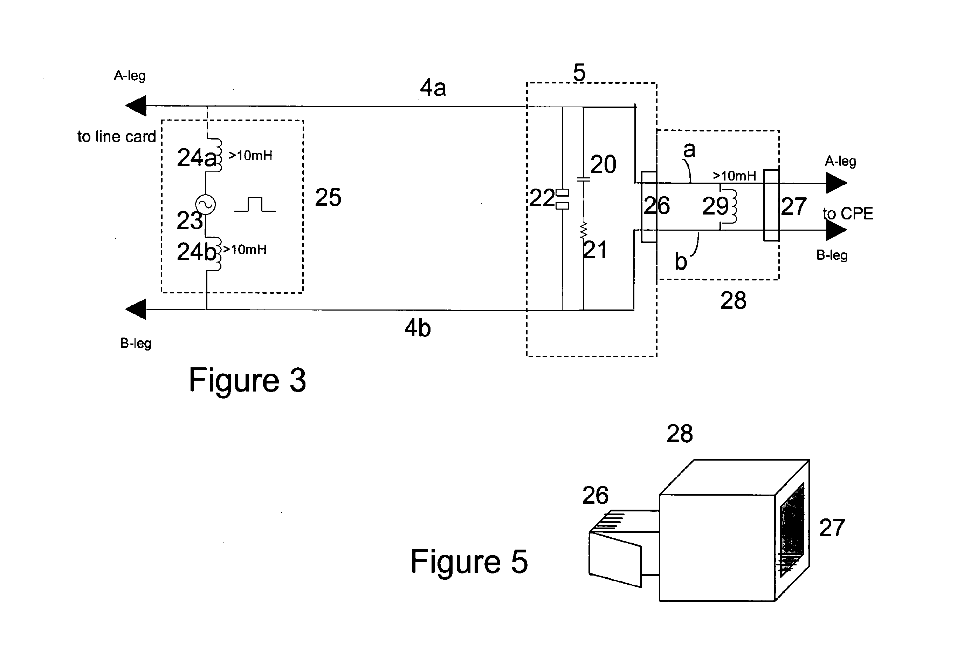

To avoid this problem, the invention provides a configuration as shown in Figures 3 and 4. Figure 3 is an electric circuit diagram of the embodiment. Figure 4 indicates how the various circuit components can be incorporated into the existing network of Figure 2 without major reconfiguration.

Figure 3 depicts a typical metallic access twisted pair telephone wire 4, comprising an A-leg 4a and a B-leg 4b, connected at the customer end to a standard network termination equipment (NTE) 5 which has a reactive component 20 (a capacitor) and a resistive component 21 connected across the wire pair 4 between the A-leg 4a and B-leg 4b, together with a surge protection device 22.

A line conditioning unit 25 is connected across the wire pair 4 at the head end - which may at an exchange or, for a fibre-to-the-cabinet installation, at the optical/copper interface point. This unit 25 comprises a power source 23 for generating an electric "whetting" or conditioning current, typically of between 20mA and 40mA, which is to flow in the circuit formed by the wire pair 4. Although the current could be continuous, it is preferable to minimise the power consumption by ramping the current up from zero to between 20 and 40 mA and then back to zero according to a predetermined routine. The routine could be operated a few times a day, to mimic typical off-hook activity on a POTS line but more, or less, frequent operation is possible.

As the legs 4a 4b should remain as a balanced wire pair, 10mH inductive loads 24a, 24b are inserted between the power source 22 and each leg 4a, 4b of the pair 4.

In order to sink the whetting current a further inductive load 29 is connected across the circuit between the A-leg 4a and the B-leg 4b. This inductance 29 acts as a short to the very-low-frequency or dc whetting signal but has a high impedance to the frequencies used by ADSL, so it provides a path for the whetting current but does not impact the ADSL spectrum.

Figure 4 depicts how these additional circuit elements may be incorporated into the existing network shown in Figure 2. The line conditioning unit 25, including the balanced inductances 24a, 24b, can be provisioned by reconfiguring the redundant POTS line diagnostic unit 2 (see Figure 1), by using the test routining function of the diagnostic unit to provide the timing and cycling information necessary for the provision of whetting current. Instead of a brief test signal, the unit 25 is configured to provide a dc or very low frequency (e.g. 1 cycle per hour or about 300 microHertz) whetting current. The conditioner 25 is connected across the circuit at the handover distribution frame (HDF) 6 using a spare access port 16 on the block, or to the frame at the communication provider's Point of Presence (PoP).

The current sink 29 is embodied in a connector unit 28 on the customer side of the NTE 5. This unit 28, also illustrated in Figure 5, can replace the microfilter 8 as there is no POTS service to interfere with, or to be interfered by, the ADSL service. The device comprises a plug 26 for connection to a complementary socket in the standard NTE 5, a socket 27 for connection to a complementary plug terminating a connecting wire from a computer modem 10, data hub, or other data communications equipment, and an inductive load 29 connected between the A-leg and the B-leg of the connection.

In many countries the standard design of plug for data communications equipment is not complementary with the standard socket of an NTE, so that it is not possible to connect such equipment to an NTE without using an adapter such as a microfilter 8, or the connector unit 28 of the present invention, or modifying the NTE faceplate. For example the standard POTS connection in the UK is to the BT431A standard, whilst the ADSL connection is of a different design known as the RJ45.

Conveniently, a network operator can therefore provide a customer with an adapter unit 28 as shown in Figure 5, carrying the inductive shunt 29, when provisioning a data-only service, with a reasonable expectation that the customer will not omit to fit it, as without such a adapter unit 28 the customer equipment's plug 27 will not fit into the NTE socket 26.

Tests carried out on 0.4mm diameter twisted pair lines of lengths ranging from 1 km to 5km showed that a 10mH inductance connected differentially across the pair showed no adverse impact on the data rates available on ADSL service carried over the lines. Similar tests carried out with VDSL on 0.6mm diameter lines between 500m and 3km again showed no adverse effects.

## Claims

1. A method of maintaining the condition of a telecommunications connection comprising an electric circuit and carrying only digital traffic, by causing a conditioning current to be transmitted over the circuit, the conditioning current being substantially greater than that generated by the digital communications using the line.

2. A method according to claim 1, wherein the conditioning current is generated intermittently.

3. A method according to claim 2, comprising the steps of monitoring for a predetermined condition to be achieved, and initiating the transmission of a conditioning current in response to that condition.

4. A method according to claim 3, wherein the predetermined condition is the elapsing of a predetermined period of time after a previous transmission of the conditioning current.

5. A method according to claim 3, wherein the predetermined condition is a decline in measured quality of signals carried on the line.

6. A line conditioning unit for maintaining the condition of an electric circuit, the conditioning unit comprising a routiner for initiating a line conditioning process according to a predetermined condition being achieved, and a current generator controlled by the routiner for generating a current substantially greater than that normally carried by the circuit.

7. A line conditioning unit according to claim 6, comprising means for generating an intermittent conditioning current.

8. A line conditioning unit according to claim 7, comprising monitoring means for monitoring for a predermined condition to be achieved, and means for initiating the transmission of a conditioning current in response to that condition.

9. A line conditioning unit according to claim 8, wherein the monitoring means is a timer.

10. A line conditioning unit according to claim 9, comprising an adapted line diagnostic unit.

11. A line conditioning unit according to claim 8, wherein the monitoring means is configured to detect a decline in signal quality on the line.

12. An interface connector for interfacing between a telecommunications network and customer premises equipment, the interface connector comprising an inductive shunt for sinking a line-conditioning current.

13. An interface connector according to claim 12 embodied in a network termination unit.

14. An interface connector according to claim 12 having a first connection means for connection to a network termination unit, and a second connection means for connection to customer-provided data communications equipment.
